# EUROPEAN PATENT SPECIFICATION

(11) **EP 2 257 024 B1**
(45) Date of publication and mention of the grant of the patent: **07.11.2012**
(21) Application number: 09749421.5
(22) Date of filing: 15.04.2009
(51) Int. Cl.: H04L 29/06

(54) **METHOD, NETWORK APPARATUS AND NETWORK SYSTEM FOR DEFENDING DISTRIBUTED DENIAL OF SERVICE DDOS ATTACK**
VERFAHREN, NETZWERKVORRICHTUNG UND NETZWERKSYSTEM ZUR ABWEHR VERTEILTER DENIAL-OF-SERVICE (DDOS)- ANGRIFFE
PROCÉDÉ, DISPOSITIF DE RÉSEAU ET SYSTÈME DE RÉSEAU ÉQUIPÉS D'UNE DÉFENSE CONTRE DES ATTAQUES PAR DÉNI DE SERVICE DISTRIBUÉ (DDOS)

(30) Priority: 23.05.2008 CN 200810067376
(43) Date of publication of application: 01.12.2010
(73) Proprietor: Chengdu Huawei Symantec Technologies Co., Ltd., Sichuan 611731 (CN)
(72) Inventor: LI, Hongxing, Guangdong 518129 (CN)
(74) Representative: Thun, Clemens
(86) International application number: PCT/CN2009/071274
(87) International publication number: WO 2009/140878

(56) References cited:
- EP-A1- 1 705 863
- CN-A- 1 640 090
- CN-A- 1 719 783
- JP-A- 2006 067 078
- US-A1- 2004 148 520
- US-A1- 2006 075 084
- US-A1- 2007 130 619

## Description

### FIELD OF THE INVENTION

The present invention relates to the field of network security technology, and more particularly to a method, a network device, and a network system for defending a Distributed Denial of Service (DDoS) attack.

### BACKGROUND OF THE INVENTION

The DDoS attack mainly utilizes the Internet Protocol and basic advantages of the Internet-transferring date packets from any sources to any destinations without deviation. The DDoS attack can be classified into two types: one is to overwhelm the network device and the server with a large quantity of data and high traffic, and the other is to make a great many incomplete requests that cannot be done, on purpose, so as to rapidly exhaust the resources of the server.

The DDoS attack is a type of attack generated on the basis of the conventional DoS attack. The DDoS attack can use more puppet hosts to initiate an attack, and attack victims on a much larger scale than before. Technically, the DDoS attack includes threat to the security of computers in the Internet and placement of Trojan horse programs. A large number of Trojan horse programs may initiate an attack simultaneously at a specified time in a certain manner, following the instructions of a main server controlled by the attacker, so as to form a vast Zombie-attacking network globally.

An important characteristic of the DDoS attack is to initiate an attack by lots of puppet hosts by sending abundance of data packets to the attacked target-side, so as to destroy, for example, the bandwidth or the transaction capability of the attacked target-side.

In order to release the pressure from the DDoS to the attacked target, a defending device may be placed before the attacked target. When the DDoS attack occurs, the defending device automatically filters the attacking streams, so as to block the DDoS attack outside of the filtering device.

The detection of an attack may be performed individually by the DDoS defending device according to characteristics of the DDoS attack, for example, an SYN Flood attack (a type of DDoS attack) is considered to occur, if a large number of SYN packets exceeding a certain threshold are detected, regardless of whether the attack effect on the attacked target is truly brought or not.

The DDoS defending device may filter the attacking packets by using a specific method according to the type of the attack, so as to filter out a large number of attacking packets and allow the normal accessing packets to pass through, thereby suppressing the attack to the attacked target to a certain extent.

US2004148520 discloses a method for defending against DDoS attacks against a customer network by means of a sensor, associated with the network, which, upon detecting an attack, notifies an analysis engine in an ISP network in order to mitigate the attack.

Because the defending solution adopts a separate device, only the characteristics from the network traffic are detected to determine whether an attack occurs or not. For different attacked targets, the characteristics of the attack and the threshold for determining an attack cannot be easily defined. Therefore, there are error reports and some attacks are not reported.

### SUMMARY OF THE INVENTION

Accordingly, the present invention is directed to a method for defending a DDoS attack, which includes the following steps:

A running status of a server is detected at the server side, to determine whether a DDoS attack occurs on the server. A data stream cleaner is notified that it needs to clean the network data stream flowing to the server if the DDoS attack occurs on the server.

The present invention is further directed to a network device, which includes a DDoS attack defending module. The module includes a detecting unit and a notifying unit.

The detecting unit is configured to detect a running status of the network device at the network-device side, to determine whether a DDoS attack occurs on the network device.

The notifying unit is configured to notify a data stream cleaner that the data stream cleaner needs to clean the network data stream flowing to the network device if the detecting unit detects that the DDoS attack occurs on the network device.

The present invention is further directed to a network system. The network system includes at least one network device and a data stream cleaner.

The network device is configured to receive and process a network data stream from the network side and comprises a DDoS attack defending module. The DDoS attack defending module is configured to detect a running status of the network device or the network data stream flowing to the network device, to determine whether a DDoS attack occurs on the network device; and notify the data stream cleaner that the data stream cleaner needs to clean the network data stream flowing to the network device if the DDoS attack occurs on the network device. The data stream cleaner is configured to negotiate with the network device and clean the network data stream according to a negotiation result.The present invention is further directed to another network device, which includes a DDoS attack defending module. The module includes a detecting unit and a notifying unit.

The detecting unit is configured to detect a running status of the network device and a network data stream flowing to the network device at the network-device side, to determine whether a DDoS attack occurs on the network device.

The notifying unit is configured to notify a data stream cleaner that the data stream cleaner needs to clean the network data stream flowing to the network device if the detecting unit detects that the DDoS attack occurs on the network device.

According to the method, the network device, and the network system for defending the DDoS attack, which are disclosed in the embodiments of the present invention, detection and preliminary defense can be carried out at the attacked target-side, so as to obtain the status of the attack and provide information required for the defense. Therefore, the attack may be effectively defended.

### BRIEF DESCRIPTION OF THE DRAWINGS

To make the technical solution of the present invention clearer, the accompanying drawings for illustrating the embodiments of the present invention or the prior art are outlined below. Apparently, the accompanying drawings are for the exemplary purpose only, and person having ordinary skill in the art can derive other drawings from such accompanying drawings without any creative effort.
FIG. 1 is a schematic diagram of the architecture of a network system according to Embodiment 1 of the present invention;
FIG. 2 is a flow chart of a method for defending a DDoS attack according to Embodiment 1 of the present invention;

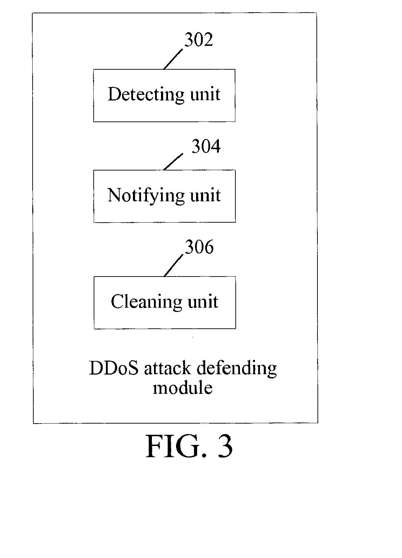

FIG. 3 is a schematic diagram of the structure of a DDoS attack defending module according to Embodiment 1 of the present invention;
FIG. 4 is a schematic diagram of the architecture of a network system according to Embodiment 2 of the present invention;
FIG. 5 is a flow chart of a method for defending a DDoS attack according to Embodiment 2 of the present invention;
FIG. 6 is a schematic diagram of the structure of a DDoS attack defending module according to Embodiment 3 of the present invention; and
FIG. 7 is a schematic diagram of the structure of a DDoS attack defending module according to Embodiment 4 of the present invention.

### DETAILED DESCRIPTION OF THE EMBODIMENTS

The technical solution under the present invention is described below with reference to the accompanying drawings. Evidently, the embodiments described below are for the exemplary purpose only, without covering all embodiments of the present invention. Those skilled in the art can derive other embodiments from the embodiments given herein without making any creative effort, and all such embodiments are covered in the protection scope of the present invention.

In the following embodiments, the network may be, for example, a mobile network, a fixed network, or a mobile-fixed-mobile convergence network; or a local area network, a metropolitan area network, or a wide area network; or an access network, a core network, or a transport network; or a point to point (P2P) network or a client/server (C/S) architecture network.

### Embodiment 1

According to this embodiment, a DDoS attack defending module is mounted on an attacked target server. The module may detect a running status of the server and/or a network data stream flowing to the server, and feed back a detection result to a data stream cleaner. The DDoS attack defending module at the server side may be hardware or software, for example but not limited to, network interface layer, kernel level, or application level software. The module may be independent software or a part of certain security software, and may also be hardware or software defending in various levels.

The running status of the server includes the running load or network traffic of a central processing unit (CPU) or a memory.

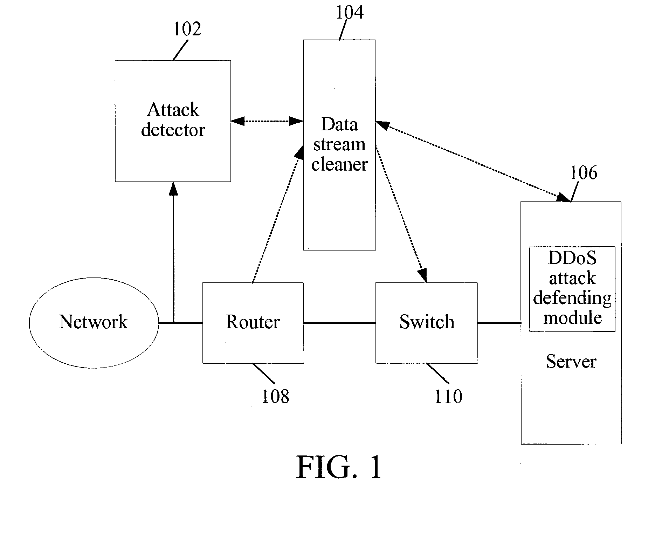

Referring to FIG. 1, the network system according to this embodiment includes an attack detector 102, a data stream cleaner 104, and at least one server 106.

The attack detector 102 is configured to detect a network data stream from the network side; and if it is detected that a DDoS attack occurs on the server, direct the attacking network data stream flowing to the attacked target to the data stream cleaner for cleaning by using a flow lead technology, and send the normal network data stream to the server. The attacked target of the DDoS attack may be recognized by using, for example, IP address or MAC address.

The data stream cleaner 104 is configured to negotiate with the attack detector and the server, and clean the network data stream according to a negotiation result.

The at least one server 106 is configured to receive and process the network data stream from the network side and includes a DDoS attack defending module. The DDoS attack defending module is configured to detect a running status of the server and/or the network data stream flowing to the server, to determine whether a DDoS attack occurs, and send a detection result to the data stream cleaner; and notify the data stream cleaner that the data stream cleaner needs to clean the network data stream flowing to the network device, if the detecting unit detects that the DDoS attack occurs on the network device. The DDoS attack defending module may further clean the data stream that has been cleaned by the data stream cleaner.

The data stream cleaner can be deployed at any position before the server. As shown in FIG. 1, the data stream cleaner is deployed between a router 108 and a switch 110.

The cleaner and the DDoS attack defending module at the server side may have a linkage interface.

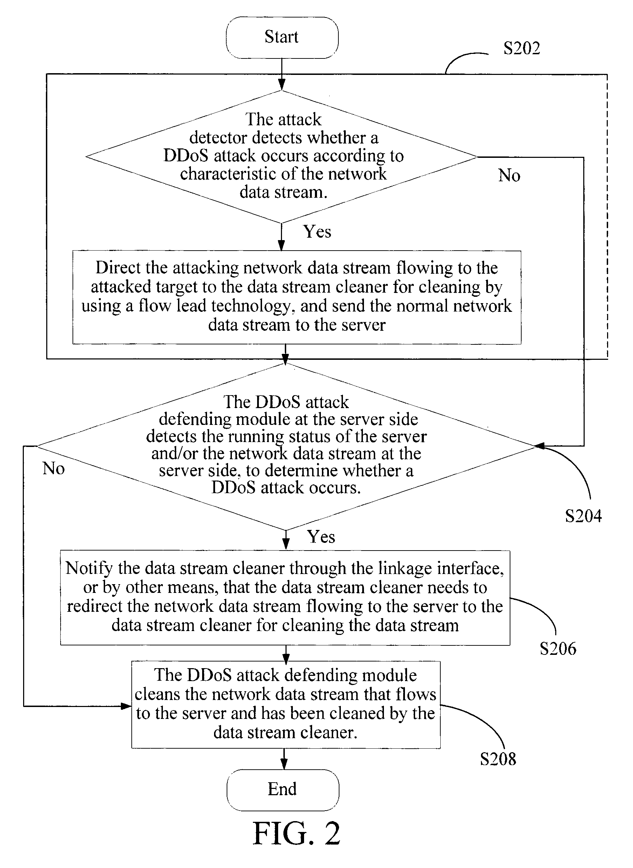

Referring to FIG. 2, the method for defending the DDoS attack according to this embodiment includes the following steps:

In step S202, the attack detector detects whether a DDoS attack occurs on the server according to characteristics of the network data stream, and if the DDoS attack is detected, directs the attacking network data stream flowing to the attacked target to the data stream cleaner for cleaning by using the flow lead technology, and sends the normal network data stream to the server. The attacked target may be recognized via, for example, IP address or MAC address.

In step S204, the DDoS attack defending module at the server side detects the running status of the server and/or the network data stream at the server side, to determine whether a DDoS attack occurs. Various engines and algorithms are adopted in the detection of the module, in order to find out the DDoS attack as soon as possible. The DDoS attack defending module works together with the detector module at the network side.

The detection at the server side may perform analysis base on streams, files, or protocols. Because the detection is carried out at the server side, higher sensitivity is achieved than that of the device at the network side, and thus more DDoS characteristics can be found than the network side.

In step S206, when determining that the DDoS attack occurs on the server, the DDoS attack defending module at the server side notifies the data stream cleaner through the linkage interface, or by other means, that the data stream cleaner needs to clean the network data stream flowing to the server to the data stream cleaner for cleaning. The DDoS attack defending module may extract characteristics of the attacking network packets, so as to notify the data stream cleaner that the data stream cleaner needs to clean the data stream.

The network data stream that has been cleaned may still contain a part of the DDoS attack, so the method of this embodiment may further include the following steps:

In step S208, the DDoS attack defending module cleans the network data stream that flows to the server and has been cleaned by the data stream cleaner.

The DDoS attack defending module according to this embodiment includes a detecting unit 302, a notifying unit 304, and a cleaning unit 306.

The detecting unit 302 is configured to detect the running status of the server and/or the network data stream flowing to the server at the server side, to determine whether a DDoS attack occurs on the server.

The notifying unit 304 is configured to notify the data stream cleaner that the data stream cleaner needs to redirect the network data stream flowing to the server to the data stream cleaner for cleaning the data stream, if the detecting unit detects that the DDoS attack occurs on the server.

The cleaning unit 306 is configured to clean the network data stream flowing to the server.

According to this embodiment, detection and preliminary defense can be carried out at the attacked target-side, so as to obtain the status of the attack and provide information required for the defense. Therefore, the attack may be effectively defended.

### Embodiment 2

According to this embodiment, an attack detector does not need to be mounted at the network side, and instead, a DDoS attack defending module is mounted on an attacked target server.

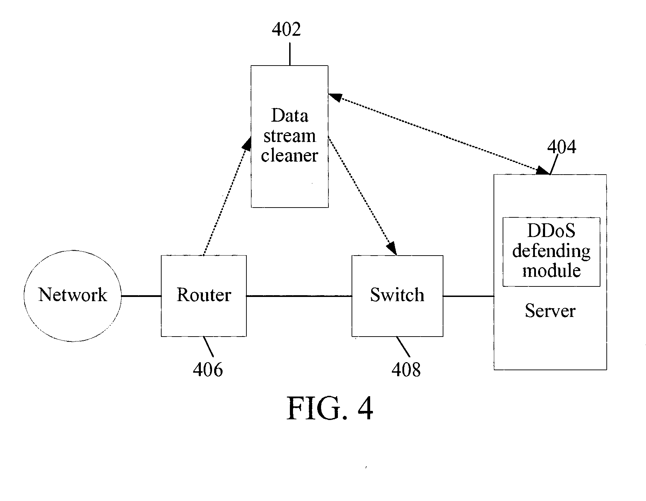

Referring to FIG. 4, the network system according to this embodiment includes a data stream cleaner 402 and at least one server 404.

The data stream cleaner 402 is configured to negotiate with the attack detector and the server and clean the network data stream according to a negotiation result.

The at least one server 404 is configured to receive and process the network data stream from the network side and includes a DDoS attack defending module. The DDoS attack defending module is configured to detect the running status of the server and/or the network data stream, and feed back a detection result to the data stream cleaner. The DDoS attack defending module may further clean the data stream that has been cleaned by the data stream cleaner.

The data stream cleaner can be deployed at any position before the server. As shown in FIG. 4, the data stream cleaner is deployed between a router 406 and a switch 408.

The cleaner and the DDoS attack defending module at the server side may have a linkage interface.

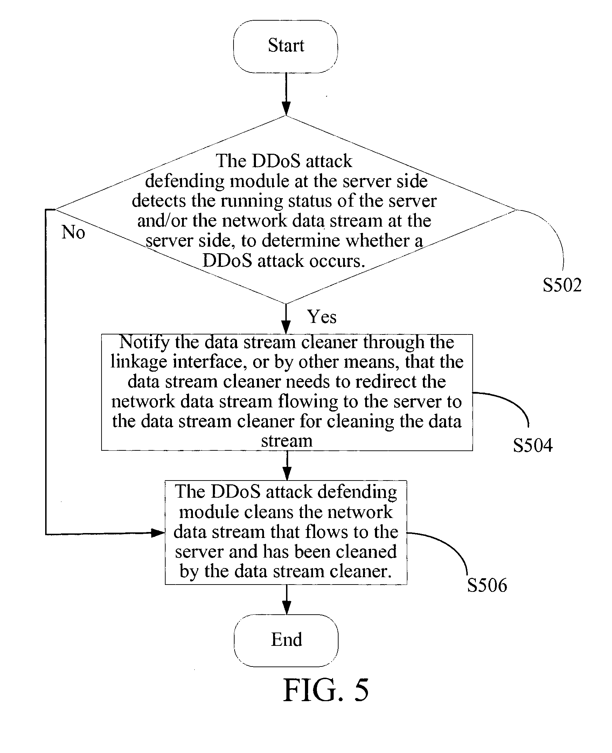

Referring to FIG. 5, the method of this embodiment includes the following steps:

In step S502, the DDoS attack defending module at the server side detects the running status of the server and/or the network data stream at the server side, to determine whether a DDoS attack occurs. Various engines and algorithms are adopted in the detection of the module, in order to find out the DDoS attack as soon as possible. The DDoS attack defending module works together with the attack detector at the network side.

The detection at the server side may perform analysis base on streams, files, or protocols. Because the detection is carried out at the server side, higher sensitivity is achieved than that of the device at the network side, and thus more DDoS characteristics can be found than the network side.

In step S504, when determining that the DDoS attack occurs on the server, the DDoS attack defending module at the server side notifies the data stream cleaner through the linkage interface, or by other means, that the data stream cleaner needs to redirect the network data stream flowing to the IP address of the server to the data stream cleaner for cleaning the data stream. The DDoS attack defending module may extract characteristics of the attacking network packets, so as to notify the data stream cleaner that the data stream cleaner needs to clean the data stream.

The network data stream that has been cleaned may still contain part of the DDoS attack, so the method of this embodiment may further include the following steps:

In step S506, the DDoS attack defending module cleans the network data stream that flows to the server and has been cleaned by the data stream cleaner.

According to this embodiment, detection and preliminary defense can be carried out at the attacked target-side, so as to obtain the status of the attack and provide information required for the defense. Therefore, the attack may be effectively defended. Moreover, no attack detector needs to be deployed, and costs are further reduced.

### Embodiment 3

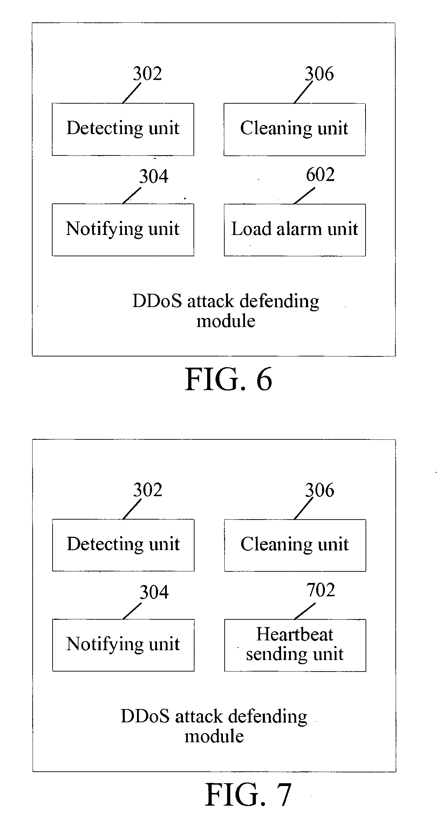

According to this embodiment, a load alarm mechanism is added to the server. As shown in FIG. 6, the DDoS attack defending module further includes a load alarm unit 602.

The load alarm unit 602 is configured to monitor the traffic of the network data stream flowing to the server, and raise an alarm to the data stream cleaner when the traffic of the network data stream reaches a preset value, for example, a self-defined hazard level.

The detection of the traffic flowing to the server is accomplished by the detection of the traffic on the network card. The detection may be linked to the cleaning and filtering strength of the data stream cleaner, according to grades classified by the bearing capability. When the traffic passing through the network card of the server reaches a hazard level, an alarm is raised to the data stream cleaner.

According to this embodiment, alarm and defense of the DDoS attack can be carried out according to the traffic at the server side, so that the security is enhanced.

### Embodiment 4

According to this embodiment, a heartbeat linkage is established between the server and the detector, and the detector may be a data stream cleaner.

When the CPU resources of the server have been exhausted, the host cannot send any message, and it may be determined whether the server breaks down by detecting the heartbeat. The data stream cleaner starts rescuing the server after detecting that the host has broken down. The rescue measures are described in the following:
(1) Limit the traffic flowing to the server in the data stream cleaner, in which the traffic-limit may be at a rescue level; detect whether the heartbeat is recovered; and restart the server if the heartbeat is not recovered.
(2) After the heartbeat is recovered, the detector analyzes the "breakdown reason" and improves the filtering rules, in which the detector may be a cleaner.

As shown in FIG. 7, the DDoS attack defending module further includes a heartbeat sending unit 702.

The heartbeat sending unit 702 is configured to send heartbeats to the data stream cleaner.

According to this embodiment, the data stream cleaner is notified by the heartbeats that it needs to limit the traffic when the server side breaks down under the DDoS attack, thereby effectively defending the DDoS attack and enhancing the security.

In the above embodiments, the attacked target server in different network environments may be other types of device, such as a computer, a mobile phone, a network node (for example, a router, a switch, or a base station), or a household appliance.

In view of the above, according to the method, the network device, and the network system for defending the DDoS attack of the present invention, detection and preliminary defense can be carried out at the attacked target-side, so as to accurately obtain the status of the attack and provide information required for the defense. Therefore, the attack may be effectively defended.

Persons skilled in the art may further realize that, in combination with the embodiments herein, units and algorithm steps of each example described can be implemented with electronic hardware, computer software, or the combination thereof. In order to clearly describe the interchangeability between the hardware and the software, compositions and steps of each example have been generally described according to functions in the foregoing descriptions. Whether the functions are executed in a mode of hardware or software depends on particular applications and design constraint conditions of the technical solutions. Persons skilled in the art can use different methods to implement the described functions for each particular application, but it should not be considered that the implementation goes beyond the scope of the present invention.

In combination with the embodiments herein, steps of the method or algorithm described may be directly implemented using hardware, a software module executed by a processor, or the combination thereof. The software module may be placed in a random access memory (RAM), a memory, a read-only memory (ROM), an electrically programmable ROM (EPROM), an electrically erasable programmable ROM (EEPROM), a register, a hard disk, a removable magnetic disk, a CD-ROM, or any storage medium of other forms well-known in the technical field.

The above descriptions are merely preferred embodiments of the present invention, but are not intended to limit the present invention. Any modification, equivalent replacement, or improvement made without departing from the principle of the present invention should fall within the scope of the present invention.

## Claims

1. A method for defending a distributed denial of service, DDoS, attack, **characterized by** comprising:
detecting a running status of a server at the server side, to determine whether a DDoS attack occurs on the server (204) ; and
notifying a data stream cleaner that the data stream cleaner needs to clean the network data stream flowing to the server if the DDoS attack occurs on the server (206).

2. The method according to claim 1, **characterized by** further comprising:
cleaning the network data stream that has been cleaned by the data stream cleaner at the server side (208) .

3. The method according to claim 1, **characterized in that**, before the detecting the running status of the server or the network data stream flowing to the server at the server side, the method further comprises:
detecting, by an attack detector at the network side, the network data stream, to determine whether a DDoS attack occurs on the server, and if a DDoS attack occurs on the server, directing the network data stream flowing to the server to the data stream cleaner for cleaning (202) .

4. A network device(106), **characterized by** comprising a distributed denial of service, DDoS, attack defending module, wherein the module comprises:
a detecting unit(302), configured to detect a running status of the network device at the network-device side, to determine whether a DDoS attack occurs on the network device; and
a notifying unit(304), configured to notify a data stream cleaner that the data stream cleaner needs to clean the network data stream flowing to the network device if the detecting unit detects that the DDoS attack occurs on the network device.

5. The network device according to claim 4, **characterized in that** the DDoS attack defending module further comprises:
a cleaning unit(306), configured to clean the network data stream flowing to the network device.

6. The network device according to claim 4, **characterized in that** the DDoS attack defending module further comprises:
a load alarm unit(602), configured to monitor the traffic of the network data stream flowing to the network device, and when the traffic of the data stream reaches a preset value, send an alarm to the data stream cleaner.

7. The network device according to claim 4, **characterized in that** the DDoS attack defending module further comprises:
a heartbeat sending unit(702), configured to send heartbeats to the data stream cleaner.

8. A network system, **characterized by** comprising at least one network device(106) according to claim 4 and a data stream cleaner(104), wherein
the network device(106) is configured to receive and process a network data stream from the network side and comprises a distributed denial of service, DDoS, attack defending module, configured to detect a running status of the network device, to determine whether a DDoS attack occurs on the network device; and notify the data stream cleaner that the data stream cleaner needs to clean the network data stream flowing to the network device if the DDoS attack occurs on the network device; and
the data stream cleaner(104) is configured to negotiate with the network device and clean the network data stream according to a negotiation result.

9. The network system according to claim 8, **characterized by** further comprising:
an attack detector(102), configured to detect the network data stream from the network side, to determine whether a DDoS attack occurs on the network device, and if a DDoS attack occurs on the network device, direct the network data stream flowing to the network device to the data stream cleaner for cleaning.

10. The network system according to claim 8, **characterized in that** the type of the network device comprises:
a computer, a server, a mobile phone, a router, a switch, or a base station.

11. A network device(106), **characterized by** comprising a distributed denial of service, DDoS, attack defending module, wherein the module comprises:
a detecting unit(302), configured to detect a running status of the network device at the network-device side and the network data stream flowing to the network device (106), to determine whether a DDoS attack occurs on the network device; and
a notifying unit(304), configured to notify a data stream cleaner that the data stream cleaner needs to clean the network data stream flowing to the network device if the detecting unit detects that the DDoS attack occurs on the network device.

12. The network device according to claim 11, **characterized in that** the DDoS attack defending module further comprises:
a cleaning unit(306), configured to clean the network data stream flowing to the network device.

13. The network device according to claim 11, **characterized in that** the DDoS attack defending module further comprises:
a load alarm unit(602), configured to monitor the traffic of the network data stream flowing to the network device, and when the traffic of the data stream reaches a preset value, send an alarm to the data stream cleaner.

14. The network device according to claim 11, **characterized in that** the DDoS attack defending module further comprises:
a heartbeat sending unit(702), configured to send heartbeats to the data stream cleaner.

## Patentansprüche

1. Verfahren zum Schützen vor einer Dienstverweigerung durch verteilten Angriff (DDoS-Angriff), **dadurch gekennzeichnet, dass** es Folgendes umfasst:
Detektieren eines Betriebszustands eines Servers auf der Server-Seite, um zu bestimmen, ob ein DDoS-Angriff auf den Server stattfindet (204); und
Benachrichtigen einer Datenstrom-Reinigungseinrichtung, dass die Datenstrom-Reinigungseinrichtung den Netzdatenstrom, der zu dem Server fließt, reinigen muss, falls der DDoS-Angriff auf den Server stattfindet (206).

2. Verfahren nach Anspruch 1, **dadurch gekennzeichnet, dass** es ferner Folgendes umfasst:
Reinigen des Netzdatenstroms, der durch die Datenstrom-Reinigungseinrichtung gereinigt worden ist, auf der Server-Seite (208).

3. Verfahren nach Anspruch 1, **dadurch gekennzeichnet, dass** vor dem Detektieren des Betriebsstatus des Servers oder des Netzdatenstroms, der zu dem Server fließt, auf der Server-Seite das Verfahren ferner Folgendes umfasst:
Detektieren, durch einen Angriffsdetektor auf der Netzseite, des Netzdatenstroms, um zu bestimmen, ob ein DDoS-Angriff auf den Server stattfindet, wobei, falls ein DDoS-Angriff auf den Server stattfindet, Leiten des Netzdatenstroms, der zu dem Server fließt, zu der Datenstrom-Reinigungseinrichtung für die Reinigung (202).

4. Netzvorrichtung (106), **dadurch gekennzeichnet, dass** sie ein Modul zum Schützen vor einer Dienstverweigerung durch verteilten Angriff (DDoS-Angriff) umfasst, wobei das Modul Folgendes umfasst:
eine Detektionseinheit (302), die konfiguriert ist, einen Betriebszustand der Netzvorrichtung auf der Seite der Netzvorrichtung zu detektieren, um zu bestimmen, ob ein DDoS-Angriff auf die Netzvorrichtung stattfindet; und
eine Benachrichtigungseinheit (304), die konfiguriert ist, eine Datenstrom-Reinigungseinrichtung zu benachrichtigen, dass die Datenstrom-Reinigungseinrichtung den Netzdatenstrom, der zu der Netzvorrichtung fließt, reinigen muss, falls die Detektionseinheit detektiert, dass der DDoS-Angriff auf die Netzvorrichtung stattfindet.

5. Netzvorrichtung nach Anspruch 4, **dadurch gekennzeichnet, dass** das Modul zum Schützen vor einem DDoS-Angriff ferner Folgendes umfasst:
eine Reinigungseinheit (306), die konfiguriert ist, den Netzdatenstrom zu reinigen, der zu der Netzvorrichtung fließt.

6. Netzvorrichtung nach Anspruch 4, **dadurch gekennzeichnet, dass** das Modul zum Schützen vor einem DDoS-Angriff ferner Folgendes umfasst:
eine Lastalarmeinheit (602), die konfiguriert ist, den Verkehr des Netzdatenstroms, der zu der Netzvorrichtung fließt, zu überwachen, und einen Alarm an die Datenstrom-Reinigungseinrichtung zu senden, wenn der Verkehr des Datenstroms einen vorgegebenen Wert erreicht.

7. Netzvorrichtung nach Anspruch 4, **dadurch gekennzeichnet, dass** das Modul zum Schützen vor einem DDoS-Angriff ferner Folgendes umfasst:
eine Herzschlag-Sendeeinheit (702), die konfiguriert ist, Herzschläge an die Datenstrom-Reinigungseinrichtung zu senden.

8. Netzsystem, **dadurch gekennzeichnet, dass** es wenigstens eine Netzvorrichtung (106) nach Anspruch 4 und eine Datenstrom-Reinigungseinrichtung (104) umfasst, wobei
die Netzvorrichtung (106) konfiguriert ist, einen Netzdatenstrom von der Netzseite zu empfangen und zu verarbeiten, und ein Modul zum Schützen vor einer Dienstverweigerung durch verteilten Angriff (DDoS-Angriff) umfasst, das konfiguriert ist, einen Betriebszustand der Netzvorrichtung zu detektieren, zu bestimmen, ob ein DDoS-Angriff auf die Netzvorrichtung stattfindet; und die Datenstrom-Reinigungseinrichtung zu benachrichtigen, dass die Datenstrom-Reinigungseinrichtung den Netzdatenstrom, der zu der Netzvorrichtung fließt, reinigen muss, falls der DDoS-Angriff auf die Netzvorrichtung stattfindet; und
die Datenstrom-Reinigungseinrichtung (104) konfiguriert ist, mit der Netzvorrichtung zu verhandeln und den Netzdatenstrom in Übereinstimmung mit einem Verhandlungsergebnis zu reinigen.

9. Netzsystem nach Anspruch 8, **dadurch gekennzeichnet, dass** es ferner Folgendes umfasst:
einen Angriffsdetektor (102), der konfiguriert ist, den Netzdatenstrom von der Netzseite zu detektieren, zu bestimmen, ob ein DDoS-Angriff auf die Netzvorrichtung stattfindet, und, falls ein DDoS -Angriff auf die Netzvorrichtung stattfindet, den Netzdatenstrom, der zu der Netzvorrichtung fließt, zu der Datenstrom-Reinigungseinrichtung für die Reinigung zu leiten.

10. Netzsystem nach Anspruch 8, **dadurch gekennzeichnet, dass** der Typ der Netzvorrichtung Folgendes umfasst:
einen Computer, einen Server, ein Mobiltelefon, einen Router, einen Netzknoten oder eine Basisstation.

11. Netzvorrichtung (106), **dadurch gekennzeichnet, dass** sie ein Modul zum Schützen vor einer Dienstverweigerung durch verteilten Angriff (DDoS-Angriff) umfasst, wobei das Modul Folgendes umfasst:
eine Detektionseinheit (302), die konfiguriert ist, einen Betriebszustand der Netzvorrichtung auf der Seite der Netzvorrichtung und den Netzdatenstrom, der zu der Netzvorrichtung (106) fließt, zu detektieren, um zu bestimmen, ob ein DDoS-Angriff auf die Netzvorrichtung stattfindet; und
eine Benachrichtigungseinheit (304), die konfiguriert ist, eine Datenstrom-Reinigungseinrichtung zu benachrichtigen, dass die Datenstrom-Reinigungseinrichtung den Netzdatenstrom, der zu der Netzvorrichtung fließt, reinigen muss, falls die Detektionseinheit detektiert, dass der DDoS-Angriff auf die Netzvorrichtung stattfindet.

12. Netzvorrichtung nach Anspruch 11, **dadurch gekennzeichnet, dass** das Modul zum Schützen vor einem DDoS-Angriff ferner Folgendes umfasst:
eine Reinigungseinheit (306), die konfiguriert ist, den Netzdatenstrom, der zu der Netzvorrichtung fließt, zu reinigen.

13. Netzvorrichtung nach Anspruch 11, **dadurch gekennzeichnet, dass** das Modul zum Schützen vor einem DDoS-Angriff ferner Folgendes umfasst:
eine Lastalarmeinheit (602), die konfiguriert ist, den Verkehr des Netzdatenstroms, der zu der Netzvorrichtung fließt, zu überwachen, und einen Alarm an die Datenstrom-Reinigungseinrichtung zu senden, wenn der Verkehr des Datenstroms einen vorgegebenen Wert erreicht.

14. Netzvorrichtung nach Anspruch 11, **dadurch gekennzeichnet, dass** das Modul zum Schützen vor einem DDoS-Angriff ferner Folgendes umfasst:
eine Herzschlag-Sendeeinheit (702), die konfiguriert ist, Herzschläge an die Datenstrom-Reinigungseinrichtung zu senden.

## Revendications

1. Procédé de défense contre une attaque par déni de service distribué, DDoS, **caractérisé en ce qu'**il comprend :
la détection d'un état de fonctionnement d'un serveur côté serveur, afin de déterminer qu'une attaque DDoS se produit ou non sur le serveur (204) ; et
la notification à un nettoyeur de train de données qu'il doit nettoyer le train de données de réseau arrivant au serveur si l'attaque DDoS se produit sur le serveur (206).

2. Procédé selon la revendication 1, **caractérisé en ce qu'**il comprend en outre :
le nettoyage du train de données de réseau qui a été nettoyé par le nettoyeur de train de données côté serveur (208).

3. Procédé selon la revendication 1, **caractérisé en ce qu'**il comprend en outre, avant la détection de l'état de fonctionnement du serveur ou du train de données de réseau arrivant au serveur côté serveur :
la détection, par un détecteur d'attaque côté réseau, du train de données de réseau, afin de déterminer qu'une attaque DDoS se produit ou non sur le serveur, et si une attaque DDoS se produit sur le serveur, l'orientation du train de données de réseau arrivant au serveur vers le nettoyeur de train de données en vue de son nettoyage (202).

4. Dispositif de réseau (106), **caractérisé en ce qu'**il comprend un module de défense contre une attaque par déni de service distribué, DDoS, le module comprenant :
une unité de détection (302), configurée pour détecter un état de fonctionnement du dispositif de réseau côté dispositif de réseau, afin de déterminer qu'une attaque DDoS se produit ou non sur le dispositif de réseau ; et
une unité de notification (304), configurée pour notifier à un nettoyeur de train de données qu'il doit nettoyer le train de données de réseau arrivant dans le dispositif de réseau si l'unité de détection détecte que l'attaque DDoS se produit sur le dispositif de réseau.

5. Dispositif de réseau selon la revendication 4, **caractérisé en ce que** le module de défense contre une attaque DDoS comprend en outre :
une unité de nettoyage (306), configurée pour nettoyer le train de données de réseau arrivant dans le dispositif de réseau.

6. Dispositif de réseau selon la revendication 4, **caractérisé en ce que** le module de défense contre une attaque DDoS comprend en outre :
une unité d'alarme de charge (602), configurée pour surveiller le trafic du train de données de réseau arrivant dans le dispositif de réseau, et quand le trafic du train de données atteint une valeur préétablie, envoyer une alarme au nettoyeur de train de données.

7. Dispositif de réseau selon la revendication 4, **caractérisé en ce que** le module de défense contre une attaque DDoS comprend en outre :
une unité d'envoi de rythme (702), configurée pour envoyer des rythmes au nettoyeur de train de données.

8. Système de réseau, **caractérisé en ce qu'**il comprend au moins un dispositif de réseau (106) selon la revendication 4 et un nettoyeur de train de données (104), dans lequel
le dispositif de réseau (106) est configuré pour recevoir et traiter un train de données de réseau depuis le côté réseau et comprend un module de défense contre une attaque par déni de service distribué, DDoS, configuré pour détecter un état de fonctionnement du dispositif de réseau, déterminer si une attaque DDoS se produit sur le dispositif de réseau, et notifier au nettoyeur de train de données qu'il doit nettoyer le train de données de réseau arrivant dans le dispositif de réseau si l'attaque DDoS se produit sur le dispositif de réseau ; et
le nettoyeur de train de données (104) est configuré pour négocier avec le dispositif de réseau et nettoyer le train de données de réseau en fonction d'un résultat de négociation.

9. Système de réseau selon la revendication 8, **caractérisé en ce qu'**il comprend en outre
un détecteur d'attaque (102), configuré pour détecter le train de données de réseau depuis le côté réseau, afin de déterminer si une attaque DDoS se produit ou non sur le dispositif de réseau, et si une attaque DDoS se produit sur le dispositif de réseau,
orienter le train de données de réseau arrivant dans le dispositif de réseau vers le nettoyeur de train de données en vue de son nettoyage.

10. Système de réseau selon la revendication 8, **caractérisé en ce que** le type de dispositif de réseau comprend :
un ordinateur, un serveur, un téléphone portable, un routeur, un commutateur, ou une station de base.

11. Dispositif de réseau (106), **caractérisé en ce qu'**il comprend un module de défense contre une attaque par déni de service distribué, DDoS, le module comprenant :
une unité de détection (302), configurée pour détecter un état de fonctionnement du dispositif de réseau côté dispositif de réseau et du train de données de réseau arrivant dans le dispositif de réseau (106), afin de déterminer qu'une attaque DDoS se produit ou non sur le dispositif de réseau ; et
une unité de notification (304), configurée pour notifier à un nettoyeur de train de données qu'il doit nettoyer le train de données de réseau arrivant dans le dispositif de réseau si l'unité de détection détecte que l'attaque DDoS se produit sur le dispositif de réseau.

12. Dispositif de réseau selon la revendication 11, **caractérisé en ce que** le module de défense contre une attaque DDoS comprend en outre :
une unité de nettoyage (306), configurée pour nettoyer le train de données de réseau arrivant dans le dispositif de réseau.

13. Dispositif de réseau selon la revendication 11, **caractérisé en ce que** le module de défense contre une attaque DDoS comprend en outre :
une unité d'alarme de charge (602), configurée pour surveiller le trafic du train de données de réseau arrivant dans le dispositif de réseau, et quand le trafic du train de données atteint une valeur préétablie, envoyer une alarme au nettoyeur de train de données.

14. Dispositif de réseau selon la revendication 11, **caractérisé en ce que** le module de défense contre une attaque DDoS comprend en outre :
une unité d'envoi de rythme (702), configurée pour envoyer des rythmes au nettoyeur de train de données.
